# EUROPÄISCHE PATENTSCHRIFT

(11) **EP 4 023 124 B1**
(45) Veröffentlichungstag und Bekanntmachung des Hinweises auf die Patenterteilung: **21.05.2025**
(21) Anmeldenummer: 21175993.1
(22) Anmeldetag: 26.05.2021
(51) Int. Cl.: A47K 11/02, A47K 11/12

(54) **KASSETTEN-TROCKENTRENNTOILETTE**
DRY SEPARATION CASSETTE TOILET
TOILETTES SÈCHES À SÉPARATION AVEC CASSETTE

(30) Priorität: 04.01.2021 DE 202021100010 U; 05.02.2021 DE 202021100585 U
(43) Veröffentlichungstag der Anmeldung: 06.07.2022
(73) Patentinhaber: Mahn, Sven, 22339 Hamburg (DE)
(72) Erfinder: Mahn, Sven, 22339 Hamburg (DE)
(74) Vertreter: Eisenführ Speiser

(56) Entgegenhaltungen:
- JP-A- 2007 151 905
- JP-A- 2010 260 039
- US-B2- 9 648 996

## Beschreibung

Die vorliegende Erfindung betrifft eine Kassetten-Trockentrenntoilette, die ein Gehäuse mit einem Kassettenaufnahmeraum, ein Sitzschüsselteil und eine darunter, in dem Kassettenaufnahmeraum des Gehäuses befindliche Kassette aufweist.

In Wohnmobilen und Wohnwagen sind festinstallierte Toiletten mittlerweile der Regelfall. In den meisten Fällen handelt es sich dabei um eine sogenannte Kassettentoilette. Eine Kassettentoilette weist ein Gehäuse mit einem darauf montierten Sitzschüsselteil auf, unter dem sich in dem Gehäuse in einem Kassettenaufnahmehohlraum eine Kassette zur Aufnahme der von dem Sitzschüsselteil aufgenommenen Exkremente befindet, die mittels Wasserspülung aus dem Sitzschüsselteil in die Kassette gespült werden. Der Kassettenhohlraum ist über eine an der Außenwand des Wohnmobils vorgesehene aufklappbare Serviceklappe zugänglich, so dass bei Bedarf die Kassette entnommen und deren Inhalt an einer dafür vorgesehenen Stelle entsorgt werden kann.

Daneben sind im Campingbereich und auf dem Gebiet mobiler Toiletten sogenannte Trenntoiletten bekannt, wie zum Beispiel in DE 20 2019 005 509 U1 und in WO 2014/022873 A3 beschrieben. Die Funktionsweise einer Trenntoilette beruht darauf, die flüssigen Exkremente (Urin) separat von den festen Exkrementen (Fäzes) aufzufangen und jeweils in separaten Behältern zu lagern. Dazu weist die Trenntoilette in einem vorderen Bereich (der Begriff vorderer und hinterer Bereich bezieht sich dabei auf die Perspektive einer auf dem Toilettensitz sitzenden Person) einen Urinsammelbereich auf, in dem Urin gesammelt wird, das dann in einen Urintank abfließt. In einem hinteren Bereich unter dem Toilettensitz befindet sich ein Fäzes-Aufnahmebereich, der unten offen ist und aus dem Fäzes durch Schwerkraftwirkung in einen oben offenen, darunter befindlichen Fäzes-Behälter fallen. Es gibt Trenntoiletten, die auch eine Spülung verwenden, aber auch solche, die ohne Wasserspülung arbeiten und alleine durch die Trennung der festen und der flüssigen Phasen und deren Sammlung in separaten Behältern funktionieren, wobei solche Trenntoiletten auch als Trockentrenntoiletten bezeichnet werden.

JP 2010 260039 A offenbart ein Toilettensystem, das das Vorhandensein von Wasser nicht voraussetzt. Das Toilettensystem weist zwei separate Behälter auf, wobei in einem Behälter Urin und in dem anderen Behälter Fäzes gesammelt wird. Ziel von JP 2010 260039 A ist es, den Inhalt der beiden Behälter derart zu erhitzen, dass der Inhalt entfeuchtet und fermentiert wird.

US 9 648 996 B2 offenbart eine Trockentrenntoilette mit separaten Behältern, wobei in einem Behälter Urin und in dem anderen Behälter Fäzes gesammelt wird. In den Behältern befinden sich Mikroben, die Pathogene abtöten und/oder Gerüche reduzieren. Die Toilette ist isoliert, so dass es im Inneren der Toilette und damit in den Behältern wärmer wird, so dass die Mikroben die Pathogene schneller abtöten.

JP 2007 151905 A offenbart eine Trockentrenntoilette mit separaten Behältern, wobei in einem Behälter Urin und in dem anderen Behälter Fäzes gesammelt wird. Das Toilettensystem ist außerdem mit einem speziellen Mechanismus im Sitzschüsselteil ausgestattet, der verhindert, dass Urin in den Fäzes-Behälter gelangt.

Das Dokument (https://www.mobildomizil.de/ Bauanleitung_Trenntoilette.pdf) offenbart auch eine Trockentrenntoilette mit separaten Behältern.

Trockentrenntoiletten haben eine Reihe von Vorteilen, nämlich deutlich längere Entsorgungsintervalle, einfache Handhabungsweise bei der Entsorgung, Wassereinsparung durch Verzicht auf Spülwasser, geringere Geruchsbelästigung, Verzicht auf teure und gefährliche chemische Zusätze und einfache Reparaturmöglichkeiten.

Die Entsorgungsintervalle für eine Trockentrenntoilette sind erheblich verlängert, da durch den Verzicht auf Spülwasser das Gesamtvolumen der temporär zu lagernden Exkremente deutlich vermindert ist. Bei ausreichender Größe des Fäzes-Behälters sind Entsorgungsintervalle von mehr als einer Woche oder mehreren Wochen möglich.

Der Entsorgungsvorgang ist sehr einfach, da der Urin in normale Toiletten, Gullys oder in Abflüssen entsorgt werden kann. Der Inhalt des Fäzes-Behälters kann grundsätzlich im normalen Müll entsorgt werden; alternativ kann der Inhalt des Fäzes-Behälters auch kompostiert werden. In diesem Fall ist es zweckmäßig, dass in dem Fäzes-Behälter ein kompostierbarer Beutel eingelegt wird, der am Ende des Entsorgungsintervalls dann einfach entnommen und der Kompostierstelle zugeführt wird.

Der geringere Wasserverbrauch von Trockentrenntoiletten ist im Wohnmobil- und Wohnwagenbereich ebenfalls ein beachtlicher Vorteil, da dadurch die Intervalle zwischen Auffüllungen des Wassertanks des Wohnmobils verlängert werden.

Es gibt keine merkliche Geruchsbelästigung mehr, zumindest wenn der Urintank mit einer Geruchssperre versehen ist. Da die Fäzes-Anteile der Exkremente sich nicht mit dem Urin mischen, trocknen sie schnell und erzeugen dann keine unangenehmen Gerüche mehr.

In Kassettentoiletten werden üblicherweise zur Unterdrückung der Geruchsentwicklung chemische Zusätze hinzugefügt, wobei dafür geeignete chemische Zusätze aber toxisch und hautreizend sind. Der Einsatz solcher chemischen Zusätze entfällt bei Trockentrenntoiletten. Bei Trockentrenntoiletten kann zur Förderung der Kompostierung von Zeit zu Zeit ein Einstreumittel in den Fäzes-Behälter zugegeben werden, wobei dafür geeignete Einstreumittel nicht toxisch sind.

Der Aufbau von Trockentrenntoiletten ist mechanisch relativ einfach und ohne bewegliche Teile zu realisieren. Daher besteht eine verringerte Gefahr von Defekten und eventuell auftretende Schäden sind in der Regel mit geringem Reparaturaufwand zu beheben, um die Funktionsfähigkeit der Toilette zu erhalten.

Viele Benutzer von Wohnmobilen, Wohnanhängern und Campinganlagen würden sich daher gerne die Vorteile einer Trockentrenntoilette zunutze machen. Hierzu hat es auch bereits Versuche gegeben, bei denen das Sitzschüsselteil nach Art einer Trenntoilette sich aus einem vorderen Urinsammelabschnitt mit einer Auslassöffnung und einem hinteren Fäzes-Aufnahmeabschnitt mit oberer und unterer Öffnung zusammensetzt. Unter dem Fäzes-Aufnahmeabschnitt wurde ein Fäzes-Behälter (z.B. ein Eimer) mit einer oberen Öffnung so angeordnet, dass diese mit der unteren Öffnung des Fäzes-Aufnahmeabschnitts ausgerichtet ist. Ferner wurde ein separater Urintank mit einem Schlauch mit der Auslassöffnung des Urinsammelabschnitts verbunden. Zur Entleerung war dann eine Klappe in dem Gehäuse der Toilette zu öffnen und der Urintank und der Fäzes-Behälter zu entnehmen, die dann durch das Wohnmobil in den Außenbereich zu tragen waren, um sie an geeigneten Stellen zu entleeren.

Es ist daher Aufgabe der vorliegenden Erfindung, eine Trockentrenntoilette so auszubilden, dass sie auch die Vorteile einer Kassettentoilette realisiert, nämlich die einfache Entnehmbarkeit der Kassette durch eine Klappe in der Außenwand und die einfache Handhabbarkeit der Kassette.

Zur Lösung dieser Aufgabe dient die Kassetten-Trockentrenntoilette mit den Merkmalen des Anspruchs 1. Vorteilhafte Ausführungsformen der Erfindung sind in den Unteransprüchen aufgeführt.

Die Kassetten-Trockentrenntoilette weist ein Sitzschüsselteil, eine Behälteranordnung und einen Schlauch auf.

Das Sitzschüsselteil setzt sich aus einem im montierten Zustand vorderen Urinsammelabschnitt mit einer Auslassöffnung und einem hinteren, nach unten offenen Fäzes-Aufnahmeabschnitt zusammen. Unter Sitzschüsselteil wird in der vorliegenden Beschreibung der gesamte Sitzschüsselaufbau oder zumindest der Teil davon, der den Hauptkorpus der Schüssel umfasst, verstanden.

Die Kassette ist eine Behälteranordnung, die zur Unterbringung im Kassettenaufnahmeraum des Gehäuses der Kassetten-Trockentrenntoilette ausgestaltet ist, und setzt sich aus einem Fäzes-Behälter mit einer oberen Öffnung und einem Urintank mit einer Tanköffnung zusammen, wobei die Behälteranordnung so ausgestaltet ist, dass nach deren Einbringung in den Kassettenaufnahmeraum die obere Öffnung des Fäzes-Behälters unter der unteren Öffnung des Fäzes-Aufnahmeabschnitts des Sitzschüsselteils liegt, wobei die Behälteranordnung eine einheitlich handhabbare Komponente ist, die als integrales Bauteil oder als Einheit aus lösbar miteinander verbundenem Fäzes-Behälter und Urintank ausgebildet ist und so nach außen als Kassette wirkt und wie eine Kassette zu handhaben ist. Die Abmessungen der Behälteranordnung sind an die Abmessungen des Kassettenaufnahmeraums angepasst.

Der Schlauch ist einerseits mit der Auslassöffnung des Urinsammelabschnitts des Sitzschüsselteils und andererseits mit der Tanköffnung des Urintanks verbunden.

In einer bevorzugten Ausführungsform hat der Urinsammelabschnitt im Wesentlichen Trichterform mit einer umlaufenden Seitenwand, die sich zur Auslassöffnung verjüngt, wobei die Auslassöffnung im tiefsten Bereich der Trichterform liegt. Vorzuweise ist die Trichterform des Urinsammelabschnitts in der Weise asymmetrisch, dass die umlaufende Seitenwand in dem an den Fäzes-Aufnahmeabschnitt angrenzenden Bereich steiler, d.h. unter einem kleineren Winkel zur Vertikalen verläuft als in dem von dem Fäzes-Aufnahmeabschnitt abgewandten vorderen Bereich.

In einer bevorzugten Ausführungsform hat der Fäzes-Aufnahmeabschnitt die Form eines Hohlzylindersegments, vorzugsweise die eines Halbzylinders, wobei die offene Seite des Hohlzylindersegments dem Urinsammelabschnitt zugewandt ist.

In einer bevorzugten Ausführungsform ist das Sitzschüsselteil als integrales Bauteil ausgebildet, d.h. der Fäzes-Aufnahmeabschnitt und der Urinsammelabschnitt sind einstückig ausgebildet.

Die Erfindung wird im Folgenden anhand eines Ausführungsbeispiels in den Zeichnungen beschrieben, in denen:

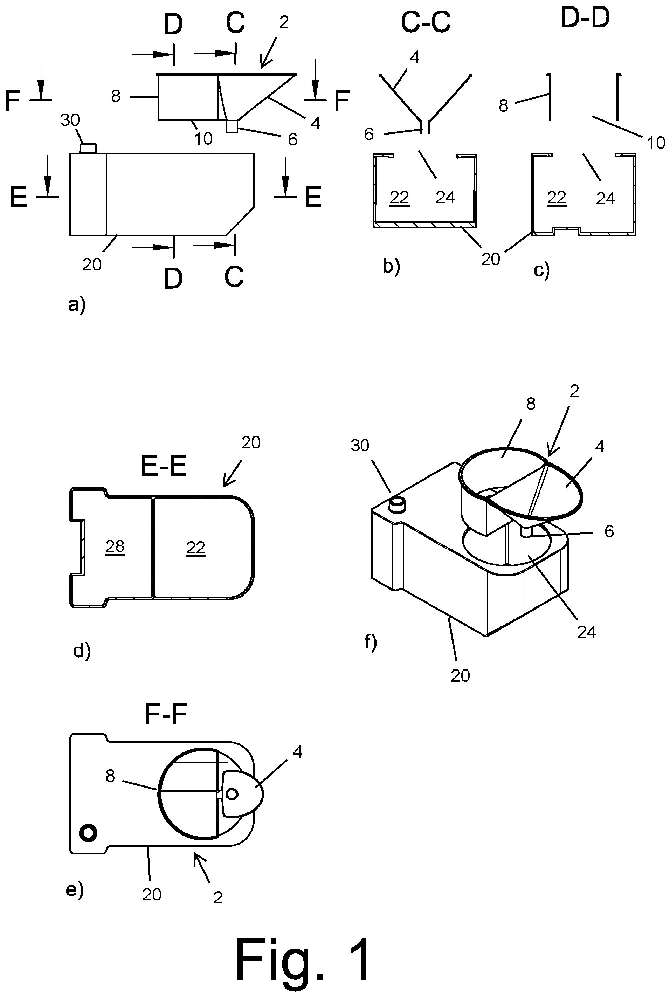

Fig. 1 a) - f) verschiedene Ansichten von Bestandteilen einer erfindungsgemäßen Kassetten-Trockentrenntoilette sind, wobei
Fig. 1 a) eine seitliche Draufsicht auf Sitzschüsselteil und Behälteranordnung ist,
Fig. 1 b) einen Querschnitt durch die in Fig. 1 a) gezeigte Ebene C-C zeigt,
Fig. 1 c) einen Querschnitt durch Sitzschüsselteil und Behälteranordnung in der Ebene D-D aus Fig. 1 a) zeigt,
Fig. 1 d) einen Querschnitt durch die Behälteranordnung durch die Ebene E-E aus Fig. 1 a) zeigt,
Fig. 1 e) einen Querschnitt durch das Sitzschüsselteil 2 durch die Ebene F-F aus Fig. 1 a) und eine Draufsicht auf die Behälteranordnung 20 von oben zeigt,
Fig. 1 f) eine perspektivische Ansicht von Sitzschüsselteil und Behälteranordnung zeigt, und
Fig. 2 a) - d) verschiedene Ansichten von Komponenten einer herkömmlichen Kassettentoilette zeigen, wobei

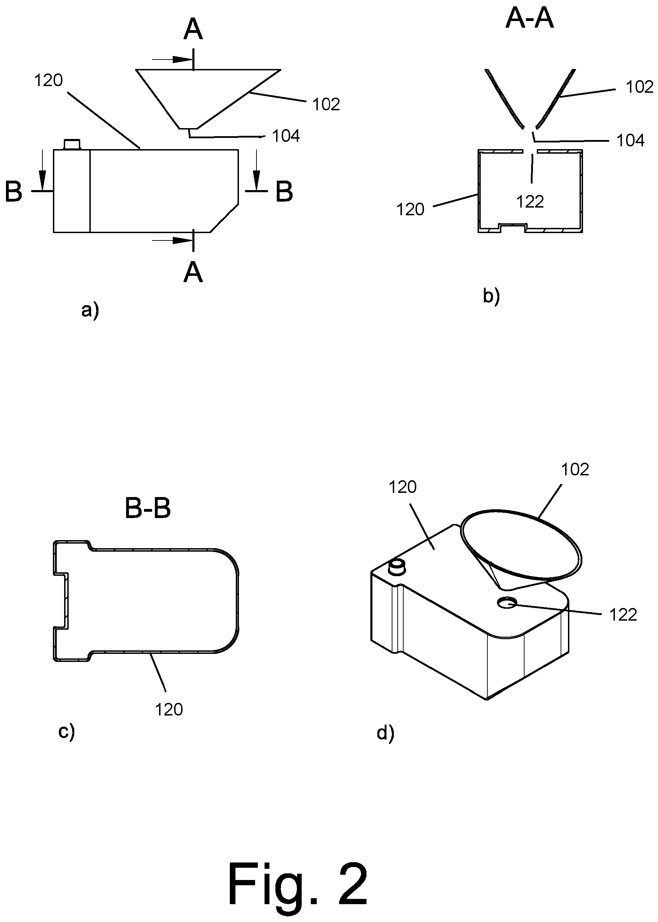

Fig. 2 a) eine seitliche Draufsicht auf Sitzschüsselteil und Kassette der Kassettentoilette ist,
Fig. 2 b) einen Querschnitt durch die in Fig. 2 a) gezeigte Ebene A-A zeigt,
Fig. 2 c) einen Querschnitt der Kassette durch die in Fig. 2 a) gezeigte Ebene B-B zeigt, und
Fig. 2 d) eine perspektivische Ansicht von Sitzschüsselteil und Kassette zeigt.

Es wird zunächst mit Bezug auf Fig. 2 a) - d) die Komponenten einer herkömmlichen Kassettentoilette beschrieben. Eine Kassettentoilette umfasst ein fest in dem Wohnmobil installiertes Gehäuse (nicht gezeigt), an dem ein Sitzschüsselteil 102 montiert ist. Das Sitzschüsselteil 102 umfasst die eigentliche Schüssel, in der die Exkremente und später Spülwasser aufgenommen werden. Das Sitzschüsselteil 102 hat eine Auslassöffnung 104.

In dem nicht gezeigten Gehäuse der Kastentoilette befindet sich in einem Kassettenaufnahmeraum eine Kassette 120, die unterhalb des an dem Gehäuse montierten Sitzschüsselteils 102 angeordnet ist. Die Kassette 120 ist in dem Kassettenaufnahmeraum beweglich gelagert, so dass sie nach Öffnen einer Zugangsklappe in der Außenwand des Wohnmobils aus dem Kassettenaufnahmeraum herausgezogen werden kann. Die Kassette 120 hat eine einzige Kassettenöffnung 122, die über eine nicht dargestellte Verbindung mit der Auslassöffnung 104 des Sitzschüsselteils 102 verbunden ist. Bei Benutzung der Kastentoilette werden Urin und Fäzes zusammen in dem Sitzschüsselteil 102 aufgenommen und daraus unter Mitwirkung von Spülwasser durch die Auslassöffnung 104 in das Innere der Kassette 120 befördert.

Mit Bezug auf Fig. 1 a) - f) werden nun entsprechende Komponenten der erfindungsgemäßen Kassetten-Trockentrenntoilette beschrieben. Es ist zu beachten, dass in den Fig. 1 a) - f) die Behälteranordnung 20 und das Sitzschüsselteil 2 in ihrer relativen Anordnung zueinander gezeigt sind, die sie einnehmen, wenn das Sitzschüsselteil 2 an dem Gehäuse (nicht gezeigt) der Kassetten-Trockentrenntoilette montiert ist und die Behälteranordnung 20 in den Kassettenaufnahmeraum des Gehäuses (nicht gezeigt) der Kassetten-Trockentrenntoilette eingebracht ist.

Die Kassetten-Trockentrenntoilette umfasst ein Sitzschüsselteil 2, das sich zur Trennung von Urin und Fäzes aus einem Urinsammelabschnitt 4 und einem Fäzes-Aufnahmeabschnitt 8 zusammensetzt, wobei der Urinsammelabschnitt 4 in einem vorderen Bereich und der Fäzes-Aufnahmeabschnitt 8 in einem hinteren Bereich des Sitzschüsselteils 2 liegt (die Begriffe vorderer Bereich und hinterer Bereich beziehen sich auf die Perspektive eines auf dem Sitzschüsselteil 2 sitzenden Benutzers der Toilette).

Der Urinsammelabschnitt 4 hat im Wesentlichen Trichterform, d.h. er wird seitlich von einer umlaufenden Seitenwand umschlossen, die sich nach unten zu der Auslassöffnung 6 hin verjüngt. Wie die Draufsicht in Fig. 1 a) zeigt ist diese Trichterform asymmetrisch in dem Sinne, dass die Seitenwand der Trichterform, die dem Fäzes-Aufnahmeabschnitt 8 zugewandt ist, näher an der Vertikalen liegt als der gegenüberliegende Seitenwandbereich im vorderen Bereich des Urinsammelabschnitts 4.

An den Urinsammelabschnitt 4 schließt sich der Fäzes-Aufnahmeabschnitt 8 an, der oben offen ist und unten an einer unteren Öffnung 10 ebenfalls vollständig offen ist.

Wie in Fig. 1 d) zu erkennen, wird die Behälteranordnung 20 durch eine Trennwand in einen Urintank 28 und einen Fäzes-Behälter 22 unterteilt. Wie in den Fig. 1 b), c) und f) zu erkennen, hat der Fäzes-Behälter 22 eine obere Öffnung 24.

Die Behälteranordnung 20 ist im Verhältnis zum Sitzschüsselteil 2 so ausgestaltet, dass die Behälteranordnung 20 nach Einbringung in den Kassettenaufnahmeraum bei montiertem Sitzschüsselteil 2 so unter diesem liegt, dass die obere Öffnung 24 des Fäzes-Behälters 22 zu der unteren Öffnung 10 des Fäzes-Aufnahmeabschnitts 8 ausgerichtet liegt, so dass Fäzes durch den Fäzes-Aufnahmeabschnitt direkt in den Fäzes-Behälter 22 fallen.

Zu der Kassetten-Trockentrenntoilette gehört schließlich noch ein in Fig. 1 nicht dargestellter Schlauch, der dazu ausgestaltet ist, mit einem Ende mit der Auslassöffnung 6 des Urinsammelabschnitts 4 verbunden ist und an seinem anderen Ende mit einer Tanköffnung 30 des Urintanks 28 verbundenist.

Die in den Darstellungen von Fig. 1 dargestellte Ausführungsform der Kassetten-Trockentrenntoilette zeigt das Sitzschüsselteil 2 als integrales Bauteil, das sich aus einem Urinaufnahmeabschnitt 4 und einem Fäzes-Aufnahmeabschnitt 8 zusammensetzt.

In der Darstellung von Fig. 1 d) ist auch zu erkennen, dass die Behälteranordnung 20 als integrales Bauteil ausgeführt ist, das sich aus einem den Fäzes-Behälter 22 bildenden Abschnitt und einem den Urintank 28 bildenden Abschnitt zusammensetzt.

## Patentansprüche

1. Kassetten-Trockentrenntoilette, die ein Gehäuse mit einem Kassettenaufnahmeraum, ein Sitzschüsselteil und eine darunter, in dem Kassettenaufnahmeraum des Gehäuses befindliche Kassette aufweist, wobei:
das Sitzschüsselteil (2) sich aus einem vorderen Urinsammelabschnitt (4) mit einer Auslassöffnung (6) und einem hinteren Fäzes-Aufnahmeabschnitt (8) mit oberer und unterer Öffnung zusammensetzt,
die Kassette eine Behälteranordnung (20) ist, die zur Unterbringung im Kassettenaufnahmeraum ausgestaltet ist und einen Fäzes-Behälter (22) mit einer oberen Öffnung (24) und einen Urintank (28) mit einer Tanköffnung enthält, wobei die Behälteranordnung (20) so ausgestaltet ist, dass nach deren Einbringung in den Kassettenaufnahmeraum die obere Öffnung (24) des Fäzes-Behälters (22) unter der unteren Öffnung (10) des Fäzes-Aufnahmeabschnitts (8) liegt, wobei die Behälteranordnung (20) als integrales Bauteil oder als Einheit aus lösbar miteinander verbundenem Fäzes-Behälter (22) und Urintank (28) ausgebildet ist, und
ein Schlauch die Auslassöffnung (6) des Urinsammelabschnitts des Sitzschüsselteils (2) mit der Tanköffnung (30) des Urintanks (28) verbindet.

2. Kassetten-Trockentrenntoilette nach Anspruch 1, wobei der Urinsammelabschnitt (4) im Wesentlichen Trichterform mit einer umlaufenden Seitenwand hat, die sich zur Auslassöffnung (6) hin verjüngt, wobei die Auslassöffnung (6) im tiefsten Bereich der Trichterform liegt.

3. Kassetten-Trockentrenntoilette nach Anspruch 2, wobei die Trichterform des Urinsammelabschnitts (4) in der Weise asymmetrisch ist, dass die umlaufende Seitenwand der Trichterform in dem an den Fäzes-Aufnahmeabschnitt (8) angrenzenden Bereich unter einem kleineren Winkel zur Vertikalen verläuft als in dem von dem Fäzes-Aufnahmeabschnitt (8) abgewandten Bereich.

4. Kassetten-Trockentrenntoilette nach einem der vorhergehenden Ansprüche, wobei der Fäzes-Aufnahmeabschnitt (8) die Form eines Hohlzylindersegments hat, vorzugsweise die Form eines Halbzylinders.

5. Kassetten-Trockentrenntoilette nach einem der vorhergehenden Ansprüche, wobei der Fäzes-Aufnahmeabschnitt (8) und der Urinsammelabschnitt (4) einstückig ausgebildet sind.

## Claims

1. A cassette dry separation toilet comprising a housing, a seat bowl portion and a cassette located below in a cassette receiving space of the housing, wherein:
the seat bowl portion (2) is composed of a front urine collecting section (4) with an outlet opening (6) and a rear faeces receiving section (8) with an upper and a lower opening,
the cassette is a container arrangement (20) adapted to be accommodated in the cassette receiving space and comprising a faeces container (22) having an upper opening (24) and an urine tank (28), the container arrangement (20) being designed in such a way that, after it has been introduced into the cassette receiving space, the upper opening (24) of the faeces container (22) lies under the lower opening (10) of the faeces receiving section (8), the container arrangement (20) being an integral component or a unit comprising a detachably interconnected faeces container (22) and urine tank (28), and
a hose connects the outlet opening (6) of the urine collection section of the seat bowl portion (2) with a tank opening (30) of the urine tank (28).

2. Cassette dry separation toilet according to claim 1, wherein the urine collection section (4) has a substantially funnel shape with a circumferential side wall which tapers towards the outlet opening (6), wherein the outlet opening (6) is located in the deepest region of the funnel shape.

3. Cassette dry separation toilet according to claim 2, wherein the funnel shape of the urine collecting section (4) is asymmetrical in such a way that the circumferential side wall of the funnel shape in the area adjacent to the faeces receiving section (8) is at a smaller angle to the vertical than in the area averted from the faeces collection section (8).

4. Cassette dry separation toilet according to one of the preceding claims, wherein the faeces receiving section (8) has the shape of a hollow cylinder segment, preferably the shape of a half cylinder.

5. Cassette dry separation toilet according to one of the preceding claims, wherein the faeces receiving section (8) and the urine collecting section (4) are formed in one piece.

## Revendications

1. Toilette sèche à cassette comprenant un boîtier, une partie de cuvette de siège et une cassette située en dessous dans un espace de réception de cassette du boîtier, dans laquelle:
la partie de cuvette de siège (2) se compose d'une section de collecte d'urine avant (4) avec une ouverture de sortie (6) et d'une section de réception de matières fécales arrière (8) avec des ouvertures supérieure et inférieure,
la cassette est un ensemble de récipients (20) configuré pour être logé dans l'espace de réception de la cassette et comprenant un récipient à matières fécales (22) ayant une ouverture supérieure (24) et un réservoir d'urine (28), l'ensemble de récipients (20) étant conçu de telle sorte qu'après son introduction dans l'espace de réception de la cassette, l'ouverture supérieure (24) du récipient à matières fécales (22) est sous l'ouverture inférieure (10) de la section de réception des matières fécales (8), l'ensemble de récipients (20) étant un composant intégral ou un ensemble constitué du récipient à matières fécales relié de manière amovible au réservoir d'urine (28).
un tuyau flexible relie l'ouverture de sortie (6) de la section de collecte d'urine de la partie de cuvette de siège (2) à une ouverture de reservoir (30) du réservoir d'urine (28).

2. Toilette sèche à cassette selon la revendication 1, dans laquelle la section de collecte d'urine (4) a sensiblement la forme d'un entonnoir avec une paroi latérale périphérique qui se rétrécit vers l'ouverture de sortie (6), l'ouverture de sortie (6) étant située dans la partie la plus basse de la forme d'entonnoir.

3. Toilette sèche à cassette selon la revendication 2, dans laquelle la forme de l'entonnoir de la section de collecte d'urine (4) est asymétrique de telle sorte que la paroi latérale périphérique de la forme de l'entonnoir dans la zone adjacente à la section de réception des matières fécales forme un angle plus faible par rapport à la verticale que dans la zone de réception des matières fécales. (8) opposée.

4. Toilette sèche à cassette selon l'une quelconque des revendications précédentes, dans laquelle la section de réception des matières fécales (8) a la forme d'un segment de cylindre creux, de préférence la forme d'un demi-cylindre.

5. Toilette sèche à cassette selon l'une quelconque des revendications précédentes, dans laquelle la section de réception de matières fécales (8) et la section de collecte d'urine (4) sont formées d'un seul tenant.
